# EUROPEAN PATENT SPECIFICATION

(11) **EP 2 479 371 B1**
(45) Date of publication and mention of the grant of the patent: **28.12.2016**
(21) Application number: 12397503.9
(22) Date of filing: 13.01.2012
(51) Int. Cl.: E06B 3/54, E06B 3/92

(54) **A profile bar to be locked to a panel, and a panel system**
Profilstange, die an einer Platte befestigt wird, und Plattensystem
Barre profilée à verrouiller sur un panneau et système de panneaux

(30) Priority: 21.01.2011 FI 20115059
(43) Date of publication of application: 25.07.2012
(73) Proprietor: Lumon Invest Oy, 45130 Kouvola (FI)
(72) Inventor: Visa, Panu, 00830 Helsinki (FI)
(74) Representative: Tampereen Patenttitoimisto Oy

(56) References cited:
- EP-A1- 0 015 842
- EP-A2- 2 119 864
- GB-A- 1 240 663
- GB-A- 1 459 477
- US-A1- 2008 236 095

## Description

The invention relates to a profile bar to be locked to a panel, and a panel system, and a method for fixing a panel to a profile bar.

### Background of the invention

Glazing systems of prior art, which are used, among other things, in balconies, are installed in buildings. The systems typically comprise an upper profile and a lower profile, which are used as guide tracks and inside which the necessary movable guide track parts are placed, between which, in turn, the single glass panes are suspended. The glass panes form walls and doors, as well as limit a space or protect it, for example, from weather conditions, for example on balconies or terraces, or divide the space into several parts and section off spaces, for example in rooms or business facilities. Typically, the profiles extend in the horizontal direction and are fixed to the structures of the building. By means of guide track parts, the single glass panes can be moved and also opened and closed around a vertical axis of rotation. The glass panes can be transferred and bunched up when opened.

Glass panes represent a special case of panels. To be able to fix the panels to the above described structures, the panels typically comprise profile bars which are normally provided at both the upper edge and the lower edge of the panel. The profile bar is normally an aluminium profile made by extrusion. The guide track parts and, if necessary, also guides, are attached to the profile bar. The profile bars are normally fixed to the panels in such a way that the panel is placed in a slot in the profile bar, and the profile bar is kept in place by compression. Normally, the fixing is also secured by means of glue and fixing members, for example screws, extending through a hole made in the panel.

Prior art is described, for example, in publication EP 2119864 A1. In this arrangement, the panel is provided with one or more grooves, and the profile bar is provided with a corresponding protrusion, and when fixing the panel and the profile bar, the panel can be installed by inserting the panel in the profile bar (or the profile bar in the panel) in the longitudinal direction of the profile bar, wherein the protrusion remains to support the panel. It is also possible that the profile bar comprises a flexible locking mechanism, in which case the panel can be installed in the profile bar by inserting it transversely to the longitudinal direction of the profile bar.

One aspect of the prior art is that the dimensions of the slot or channel in the profile bar are fitted for a panel with a given thickness. Therefore, the same profile bar cannot be applied in different uses, in which the thickness of the panels, for example glass panes, is different. Furthermore, if a rigid profile bar is used, such as in US 2008/0236095 A1, the profile bar must be inserted in the panel in the longitudinal direction, which takes time, particularly if the panel is wide. On the other hand, if the profile bar comprises a flexible locking mechanism, some force is required to install the panel by pressing it into the profile bar.

The reliable fixing of the profile bar to the panel is important. The fixing can be enhanced by gluing. However, the fixing may be incomplete until the glue has dried, and in the meantime the panel may still be transported and stored. There is a risk that the profile bar glides along the panel, moving in the longitudinal direction of the profile bar.

### Brief summary of the invention

It is an aim of the invention to improve the prior art in view of installation and manufacture. In particular, the aim is to secure that the profile bar remains fixed to the panel as firmly as possible. For this purpose, if necessary, good use is also made of an end plug for the profile bar, preferably two end plugs.

A profile bar according to the invention, to be locked to a panel, is presented in claim 1. A panel system according to the invention is presented in claim 9.

The solution to be presented will enable the fixing of the profile bar to glass panes or panels in a way that is easy and quick in view of the installation. In the solution, a separate locking piece is applied, which is installed in the profile bar and which keeps the panel fixed. A particular advantage is that the slot or corresponding long channel in the profile bar may be greater in width than the thickness of the panel, to facilitate the installation of the panel. In an example, another particular advantage is that the end plug belonging to the profile bar can be locked in place by means of the locking piece. According to yet another example, the profile bar to be locked can be removed and, if necessary, also disassembled in a very simple way. According to an example of the presented solution, it is now easier to remove the panel and the profile bar, in spite of, for example, gluing.

The panel can also be kept fixed to the profile bar when the glue securing the fixing has not yet dried, that is, when its holding force is not at the greatest. The panel is placed between two locked end plugs in such a way that the panel cannot move from its position. The movement is prevented in at least the longitudinal direction of the profile bar.

A particular advantage is that the profile bar can be fixed to the panel without making holes in the panel or in the profile bar, and separate fixing members, such as screws, will not be needed. Also, for example screws are not needed for fixing the end plug to be installed at the end of the profile bar.

Furthermore, in an example, glass panes or panels of different thicknesses can be installed partly in the same profile bar. The width of the locking piece is selected according to the thickness of the panel. This is useful in view of the manufacturing technique, and it will not be necessary to make several different profile bars.

The arrangement according to the examples can be applied in glazing systems which are used outdoors or indoors. In addition to particularly glass, the invention can also be applied in various systems in which different panels and similar plate-like materials are utilized.

### Brief description of the drawings

The invention will be illustrated in the following description by means of some examples and with reference to the appended drawings, in which:
- Fig. 1a: shows a panel of prior art in an end view,
- Fig. 1b: shows a profile bar of prior art in an end view,
- Fig. 1c: shows an end view of a panel of prior art connected to a profile bar of prior art,
- Fig. 2a: shows an end view of the frame of a profile bar according to the invention,
- Fig. 2b: shows an end view of a locking piece for a profile bar according to the invention,
- Fig. 2c: shows a panel system according to the invention, comprising a panel and a profile bar,
- Fig. 3: shows another profile bar according to the invention, and a panel connected to it,
- Fig. 4: shows a third profile bar according to the invention, and a panel connected to it,
- Fig. 5a: shows an embodiment of the locking piece in a perspective view,
- Fig. 5b: shows the use of the locking piece according to Fig. 5a for locking an end plug,
- Figs. 5c and 5d: show a panel, a profile bar, and an embodiment of an end plug for the profile bar in a perspective view,
- Figs. 6a to f: illustrate the installation of the panel in the profile bar, and
- Figs. 6g to i: illustrate the removal of the panel from the profile bar.

### Detailed description of the invention

Panel systems are used for protecting or delimiting a space; for example, a balcony can be shielded with glass panels (balcony glazing), or panels can be used in offices for demarcating the personal work space of an employee. The system normally comprises several successive panels which are movable. The panels are normally rectangular, wherein they are normally in an upright position and form a closed wall or a large window when placed one after the other. They can be connected to guide tracks and be movable in the direction of these guide tracks, typically in the horizontal direction. Typically, the panels are fixed to profile bars which are, in turn, fixed to the guide tracks by members which are movable in the guide track.

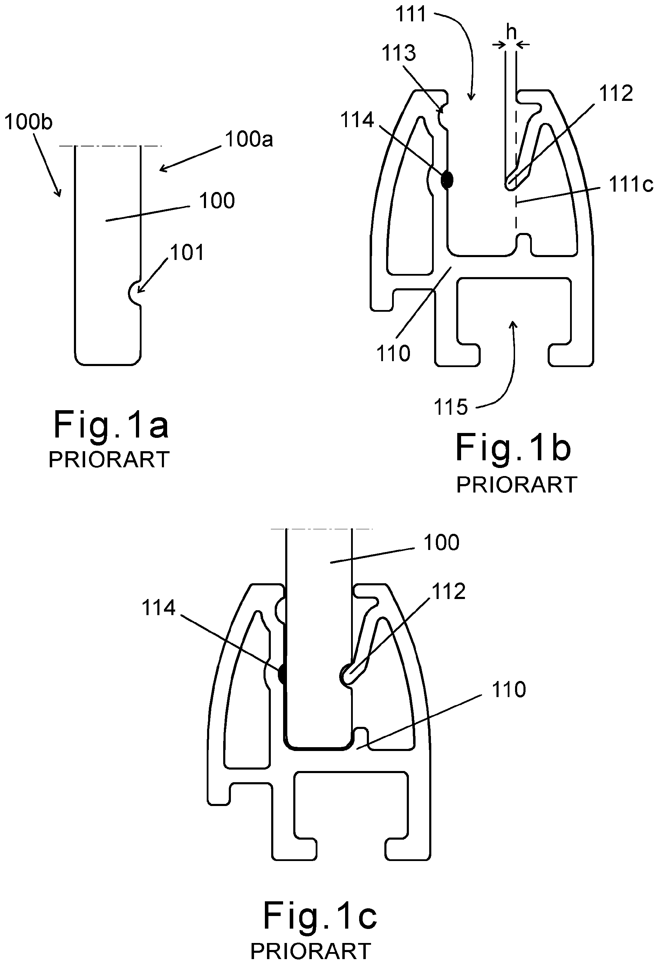

Figure 1 a shows a panel 100 according to the prior art in an end view. The panel is provided with a groove 101 for locking the panel in position. The groove 101 is parallel to the side of the panel and its edge, and said side is placed in the frame 110 of a profile bar (Fig. 1 b). Being a planar piece, the panel has a first side 100a and an opposite second side 100b, which sides are parallel. The groove 101 of the panel is provided on the first side of the panel.

Figure 1 b shows an end view of a profile bar according to prior art. In its frame 110, the profile bar comprises a slot 111 or a corresponding channel, in which the panel 100 will be installed. Furthermore, the profile bar comprises at least one protrusion 112 which protrudes from the side 111c of the slot and can be fitted in the groove 101 of the panel. The profile bar also comprises a second slot 115 which, in a typical use, receives other parts of the panel system, such as hinge pins or the like, which are typically fixed to the above-described guide tracks in the system. The profile bar may further comprise at least one groove 113 which is placed in the slot. The purpose of the groove 113 is to function as an area where a sealing or adhesive compound, such as silicone or glue 114, can be positioned to seal or strengthen the joint between the profile bar and the panel. After the panel has been installed in the profile bar (Fig. 1c), the protrusion 112 is at least partly in the groove 101, wherein the panel 100 is locked in the profile bar 110 so that the profile bar cannot be pulled out in a direction that is parallel to the panel and perpendicular to the longitudinal direction of the profile bar.

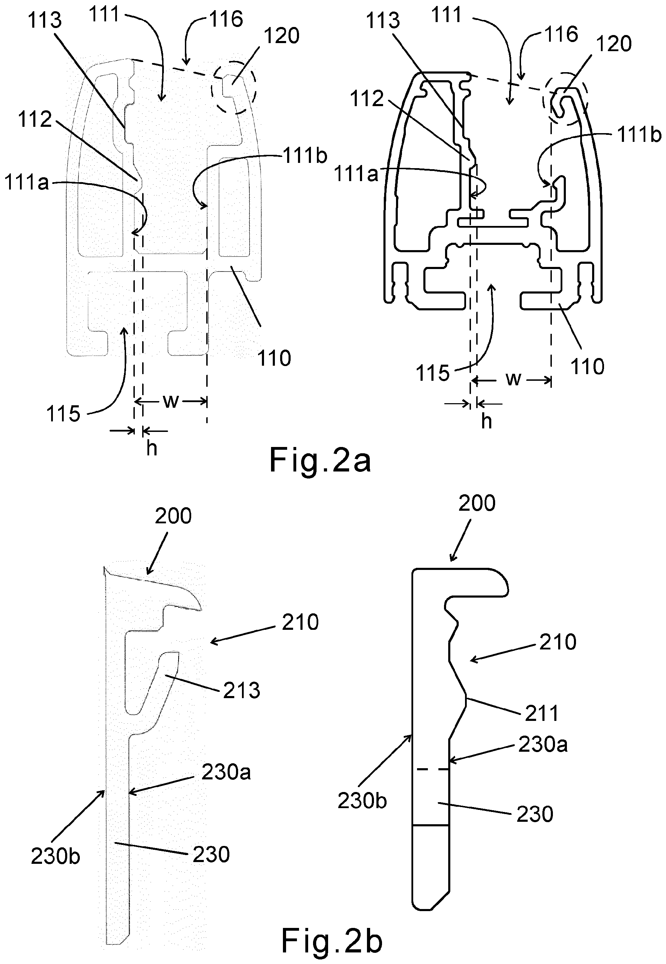

In Figs. 2a to 2c, 3, 4, 5a to 5d, and 6a to 6i, similar or corresponding parts are denoted with the same reference numbers. In connection with the description of a given figure, it is possible to use the same reference numeral that has been used in another figure to denote the same or a corresponding part.

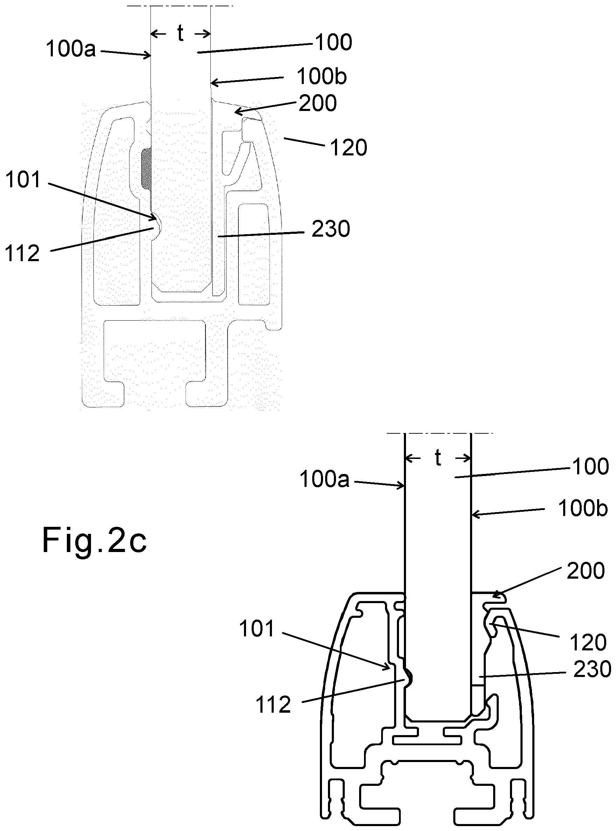

Figures 2a, 2b, and 2c each show two examples of the structures of the profile bar. Figure 2a shows the frame 110 of a profile bar according to an example. The frame 110 comprises a slot 111 in which the panel is installed. The slot comprises a first side 111 a and a second side 111 b on the opposite side of the slot, to delimit the slot. The sides of the slot are, for example, surfaces or walls or other structures which delimit the slot and support the pieces to be placed in the slot, particularly a planar panel. When locking the panel in the slot, the first side 111 a of the slot is placed onto the first side 100a of the panel (see Fig. 2c), and the second side 111 b of the slot is placed onto the second side 100b of the panel. Because the panel is locked in the slot 111 and the profile bar is fixed to the rest of the system, the slot must be mechanically sturdy. In other words, both sides 111 a and 111 b of the slot are arranged to support the panel mechanically.

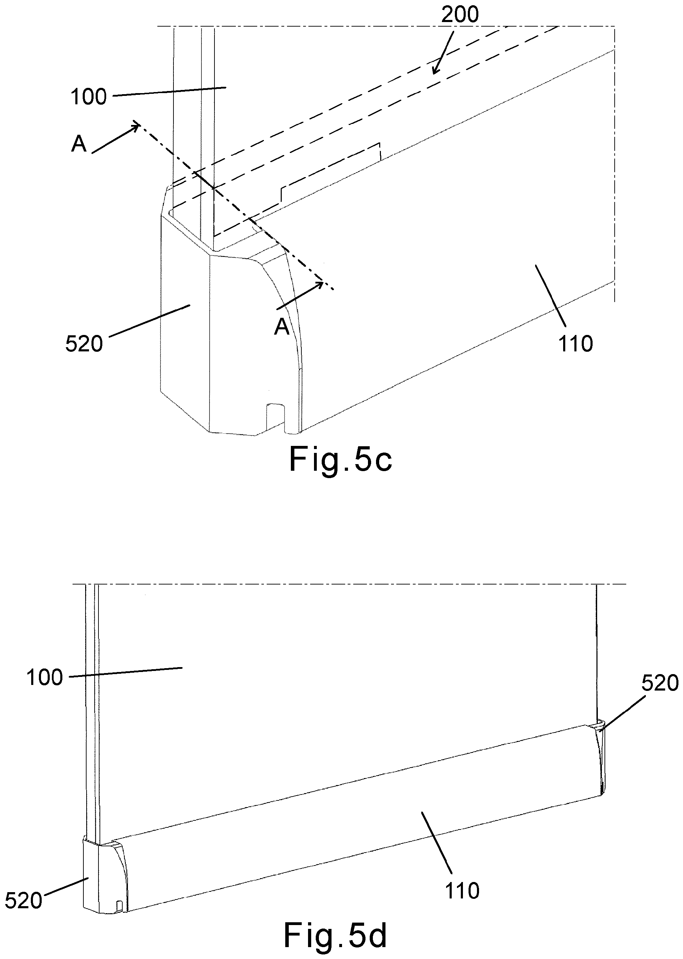

The frame 110 of the profile bar comprises at least one protrusion 112 by which the panel 100 is locked to the profile bar. This protrusion is placed on the first side 111 a of the slot. Furthermore, the frame may be provided with at least one groove 113 for positioning an adhesive or sealing compound. Preferably, this groove is also on the first side 111 a of the slot. Figure 2a only shows a cross-sectional view of the frame of the profile bar. In the direction perpendicular to the plane of the figure, the longitudinal direction of the profile bar, the profile shape of the frame is continuous as shown in Fig. 5d. Such a frame may be made, for example, by extrusion, wherein the profile shape is naturally continuous. Thus, the upper edge of the slot forms an elongated opening 116, in which the panel is installed. In Fig. 2a, the opening 116 of the slot 111 is indicated with a straight broken line. Furthermore, the frame 110 also comprises at least one fixing member 120, by means of which a locking piece 200 (Figs. 2b and 2c) is locked to the profile bar or is held tightly in position. The fixing member 120 may be a protrusion, a groove, or a shape, in which a corresponding groove, protrusion or shape of the locking piece 200 is arranged to be received. The fixing member 120 shown in Fig. 2a is a protrusion, and for the sake of illustration, it is encircled with broken lines in the figure.

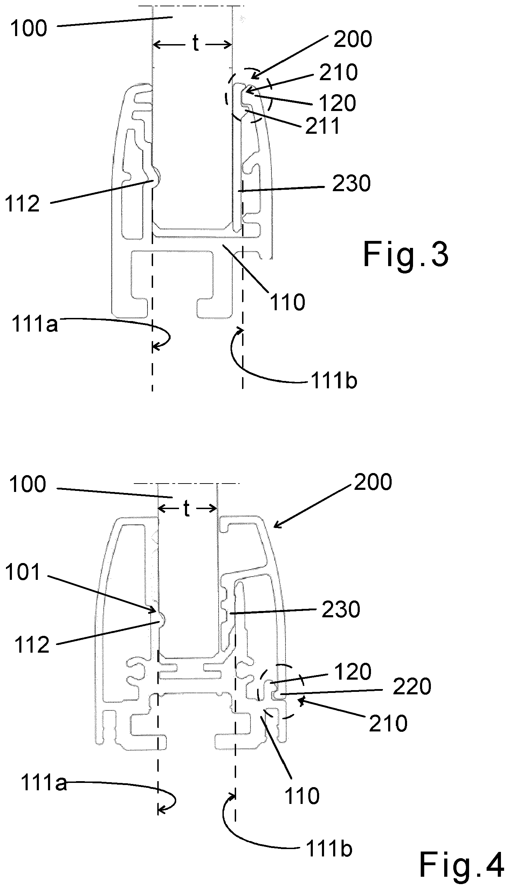

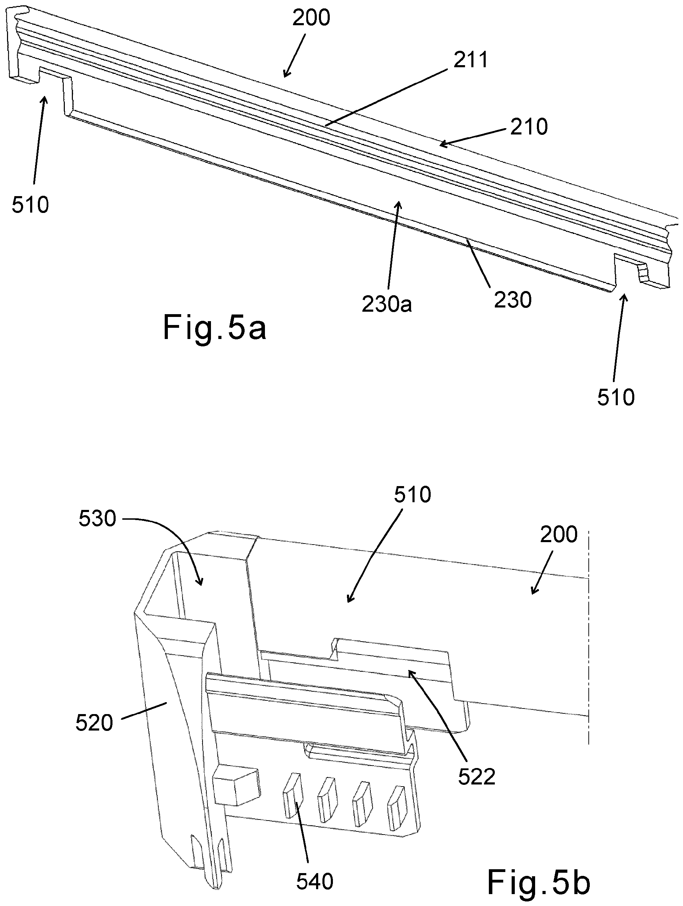

The profile bar also comprises a separate locking piece 200, one embodiment being shown in Fig. 2b. The locking piece comprises at least a locking part 230 for locking the panel in the profile bar. The locking part 230 may be planar, and it has a first surface 230a and an opposite second surface 230b. The function of the locking part 230 is to make the slot 111 narrower so that the width of the slot made narrower matches the thickness of the panel 100. The locking piece, particularly its locking part 230, pushes the panel against the protrusion 112. Another function of the locking part 230 is to transmit the supporting forces of the second side 111 b of the slot to the panel. The locking piece may also comprise one or more fixing members 210 for fixing the locking piece 200 to the frame 110. The fixing member 210 may be, for example, a groove, a protrusion, or a shape. One example is a protrusion 220 (Fig. 4), a flexible bulge or protrusion 213 (Fig. 2b), or a shape 211. The shape of the locking piece 200 is preferably continuous in the longitudinal direction of the profile bar, and the locking piece may be made, for example, by extrusion. The length of the locking piece is preferably equal to or slightly shorter than the length of the panel or the profile bar, depending on *e.g.* the shape of the end piece 520 (Fig. 5b). It is also possible, in some embodiments, to use a shorter locking piece or perhaps several shorter locking pieces in succession.

Figure 2c illustrates the locked joint of the panel 100 and the profile bar. When the first surface 100a of the panel is in contact with the first side 111 a of the slot, the first side 111 a supports the panel mechanically. Also, the protrusion 112 is in the groove 101 of the panel. On the opposite side of the slot, the first surface 230a of the locking part 230 and the second side 111 b of the slot are abutting so that the locking part 230 transmits the supporting forces of the second side 111 b of the slot to the panel. Furthermore, the second surface 100b of the panel is in contact with the second surface 230b of the locking part, so that the mechanical support given by the slot is transmitted to the panel. It is also possible to provide the panel with several grooves and the side wall of the slot with several protrusions, so that several grooves could receive one bulge each.

The purpose of the locking piece 200 is not particularly to tension the panel 100 in the slot 111, so that the locking piece 230 in the presented example is not wedge-like but has a substantially constant thickness. However, in some embodiments, the tip of the locking part 230 may be tapered to facilitate the insertion of the locking piece between the panel 100 and the frame 110 in a way to be described below. As described above, one function of the locking part 230 is to transmit the supporting forces of the second side 111 b of the slot to the panel. So that these supporting forces would be transmitted further to the second surface 100b of the panel, the total thickness of the locking part 230 and the panel should be substantially equal to the width w of the slot (Fig. 2a). In a corresponding manner, in view of the installation of the panel, it is advantageous that the width w of the slot 111 (Fig. 2a) is slightly greater than the thickness t of the panel 100 (Fig. 2c), to facilitate the installation of the panel 100 in the slot. In particular, also at the protrusion 112, the width of the slot is preferably at least equal to the thickness t of the panel. Thus, the width w of the slot is greater than the thickness t of the panel by at least the height h of the protrusion 112. These dimensions are illustrated in Figs. 2a and 2c. However, the width of the slot may also be significantly greater than this, in which case the thickness of the locking piece 230 is greater accordingly. It is possible that the protrusion is implemented with a flexible structure or protrusion as shown in Fig. 1 b. Thus, the height of the protrusion refers to the height of the protrusion in relation to the side of the slot, for example, in relation to the corresponding side wall, as shown in Fig. 1b. In Fig. 1b illustrating an arrangement of prior art, this side of the lot is denoted with the reference numeral 111 c, and the height of the protrusion 112 with the letter h.

Figure 3 shows another embodiment of the profile bar, as well as a panel 100 connected to this profile bar. The groove 101 of the panel receives the protrusion 112 on the first side of the slot of the frame 110, locking the panel in such a way that the panel cannot move up in Fig. 3 and out of the slot. Furthermore, the panel is locked in the slot with a locking piece 200 so that the panel cannot move in the slot in a direction perpendicular to its plane. The locking part 230 of the locking piece is arranged between the panel and the second side of the slot, and the thickness of the locking part 230 is fitted to correspond to the difference between the width of the slot and the thickness of the panel. In this example, the thickness of the panel is greater than in the example of Fig. 2c, and the locking piece 200 is narrower accordingly, even if the width of the frame 110 were unchanged. The structure of the frame 110 may also change. In Fig. 3, the locking member 210 of the locking pieces consists of a locking shape 211 in which the fixing member 120 of the frame 110 is placed and keeps the locking piece in position. The fixing member 120 of the frame is a protrusion having a shape matching to the locking piece and keeping the locking piece in position.

Figure 4 shows a third embodiment of the profile bar as well as a panel 100 connected to this profile bar. In this embodiment as well, the locking part 230 of the locking piece 200 is fitted between the second surface 100b of the panel and the second side 111 b of the slot, and the protrusion 112 on the first side of the slot is received in the groove 101 on the first surface 100a of the panel. The second side of the slot is slightly lower than in the preceding embodiments. For this reason, the shape of the locking piece 200 is different and extends higher than the second side of the slot. The locking piece 200 comprises a fixing member 210 which is a flexible protrusion 220 in this example. The protrusion 220 is placed in a fixing member 120 which is provided in the frame 110 and is also a protrusion having, in turn, a shape that matches the protrusion 220. The fixing member 120 keeps the locking piece 200 in position. It is also possible to implement matching shapes between the locking part 230 and the second side of the slot, to increase friction or to keep the locking part 200 in position in the slot and against the panel. In this example, the fixing member 120 is not at the edge of the slot, preferably on the second side of the slot, as in the example of Fig. 2c or 3, for instance. The fixing member 120 of the frame and, correspondingly, also the fixing member 210 of the locking piece are placed on the outer side of the frame. In this embodiment, the locking piece 200 constitutes a major part of the visible outer surface and the design of the profile bar.

By making the slot 111 wider, it is possible to fit panels of different widths in the profile bar. The thickness of the locking piece 200 can also be used to select the thickness of the panel to be used in the profile bar. It is also possible to fit the slot for a thick panel, and when thinner panels are used, only the thickness of the locking part of the locking piece is changed. This provides the advantage that it will not be necessary to make several different frames.

Figure 5a shows a perspective view of an embodiment of the locking piece 200, corresponding to the example of Fig. 2c. The locking piece comprises a locking part 230 which makes the slot narrower. The locking piece 200 also comprises a shape 211 that functions as the fixing member 210. As shown in Fig. 5a, the locking piece and its shape 211 extend in the longitudinal direction. In the embodiment of Fig. 5a, at least one end of the locking part is also provided with a desired shape by means of an indentation 510. The indentation 510 is provided in the locking part 230 and does not extend to the fixing member 210 in this example.

The shape of the locking piece of Fig. 5a, produced with the indentation 510, is fitted to correspond to the shape of an end piece 520 (Fig. 5b) belonging to the profile bar in such a way that the end piece can also be locked in position by means of the locking piece 200. In the embodiment of Fig. 5a, this fitted shape is the indentation 510. If the end piece is to be used at only one end of the locking piece, the locking piece 200 may comprise a corresponding fitted shape at its one end only. In a corresponding manner, if two or more short locking pieces are used to lock the panel in the profile bar, only the outermost locking pieces are provided, at their one end only, with the fitted shape corresponding to the end piece 520, provided by for example the indentation 510. The shape of the indentation 510 corresponds, for example, to one or more dents or protrusions.

Preferably, the locking piece 200 is uniform and is locked at both ends to end pieces 520 which, in turn, keep the panel stationary between them. In this way, the moving of the panel in the longitudinal direction of the profile bar and the frame 110 is minimized as well as possible. Thus, there is time and possibility for the glue to adhere permanently to the panel. The presented solution and way of installation also make it possible to press the panel perpendicularly against the glue. It is not necessary to glide the panel along the glue, so that the glue is not unnecessarily smudged or spread.

Figure 5b shows a perspective view of locking the end piece 520 in position by means of the locking piece 200. The end piece 520 is fitted to cover the end of the frame 110 and the lower edge of the panel. The end piece 520 has a shape that corresponds to the shape fitted in the locking piece 200. The end piece is provided with an indentation 522 which provides the desired shape that corresponds to, for example, one or more dents or protrusions. The end piece 520 and the locking piece 200 are locked to each other to prevent the pulling of the end piece 520 out of the frame and its removal from the locking piece. The shapes of the indentations 510 and 522 are intermeshed and prevent the detachment of the pieces from each other. The indentations 510 and 522 are placed at the second side 100b of the panel. In the example of Fig. 5b, the end piece 520 also comprises a slot 530 in which the edge of the panel 100 can be placed, so that the end piece slightly overlaps on the edge of the panel as well as on the first and second sides 100a and 100b of the panel. The slot 530 is not necessary. Furthermore, the end piece may comprise protrusions or structures and *e.g.* fixing members 540, by means of which the end piece is installed in the frame of the profile bar and which are placed in the shapes of the frame 110 which, in turn, keep the end piece in position.

Figures 5c and 5d show perspective views of a panel 100 fixed to the frame 110 of the profile bar and locked with the locking piece 200. Furthermore, the end of the profile bar is shielded with an end piece 520. At the installation stage, the end piece 520 can be fixed to the frame 110 before the fixing of the locking piece 200. Figure 5d shows a panel similar to that in Fig. 5c, and end pieces 520 provided at both ends of the profile bar. In Figs. 5c and 5d, the locking piece 200 is on the rear side of the panel 100.

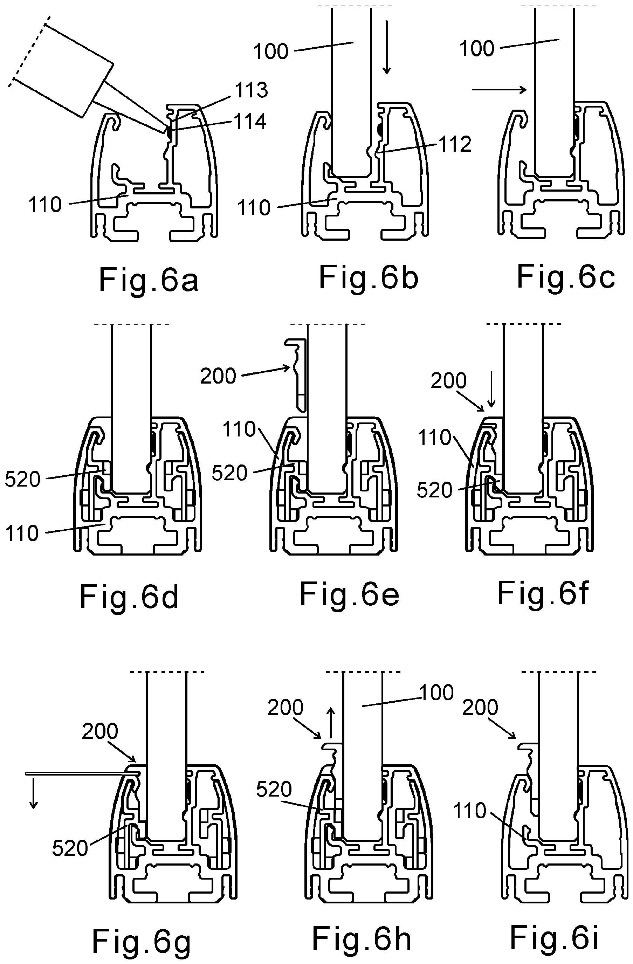

Figures 6a to 6f illustrate the fixing of the panel 100 to the profile bar. The frame 110 shown in Figs. 6a to 6i corresponds to the frame shown in Figs. 2c and 5c. The end piece 520 shown in Figs. 6d to 6h corresponds to the end piece shown in Fig. 5b. The locking piece 200 shown in Figs. 6e to 6i corresponds to the locking piece shown in Fig. 5a.

According to Fig. 6a, to secure the fixing of the panel 100, it is possible in a first step to apply glue 114 on the first side 111 a of the slot in the profile bar to be locked, for example in a groove 113 provided for this purpose. According to Fig. 6b, the panel 100 is inserted in the slot 111 in the direction of the plane of the panel so that the groove 101 of the panel and the protrusion 112 of the profile bar to be locked are aligned. Next, according to Fig. 6c, the panel pushed in place, perpendicularly to the plane of the panel, towards the first side 111 a of the slot so that the protrusion 112 is inserted in the groove 101. If an end piece 520 is used, the end piece can be installed in the profile bar, for example, after this. The end piece can also be installed in the frame 110 before the panel and the locking piece. The end piece 520 can be installed by pushing it in the longitudinal direction of the frame. Figure 6d shows some parts of the end piece 520, including fixing members 540. In Figs. 6d to 6h, the end piece 520 is shown in cross-section, at the section A-A of Fig. 5c, as well as seen from the direction of the end of the profile bar and the frame 110. The frame 110 and the locking piece 200 are also viewed from the direction of the end of the profile bar and in the longitudinal direction of the profile bar.

After this, according to Figs. 6e and 6f, the locking piece 200 is inserted in the direction of the cross-sectional plane of the profile bar and the plane of the panel so that the locking part 230 of the locking piece is placed between the second surface 100b of the panel and the second side 111 b of the slot. It is also possible to push the panel in place by means of the locking piece 200. Thus, when the locking part 230 of the locking piece is inserted between the second surface 100b of the panel and the second side 111 b of the slot, the first side 100b of the panel is simultaneously pushed towards the first side 111 a of the slot, wherein the protrusion 112 is inserted in the groove 101. In some cases, the shape of the end piece can be designed to be suitable for such an installation.

It may also be that the length of the locking piece 200 in a direction transverse to the drawing plane of Figs. 6a to 6i is shorter than the length of the panel or the profile bar in this direction, in which case several locking pieces can be used. Thus, the other locking pieces are also installed in a corresponding way by inserting their locking parts 230 between the second surface 100b of the panel and the second side wall 111 b of the slot.

The presented profile bar also makes it possible to insert the panel in the slot of the profile bar in the longitudinal direction of the profile bar. However, in an installation situation in practice, it may be easier to use the above presented direction of installation.

The shape 211 of the locking piece shown in Figs. 5a, 6e and 6f functions as the fixing member 210. In this example, the shape 211 is selected so that the locking piece 200 is also removable, wherein the shape 211 is movable past the locking member 120 of the frame 110 to its position and also off the frame. However, the shape 211 tends to keep the locking piece 200 in position. When removing the locking piece, the frame 110 of the profile bar or the shape 211, or both of them, are flexible, wherein the locking piece 200 can be removed. This is illustrated in Figs. 6g to 6i.

As shown in Fig. 6g, a lever or a suitable tool can be placed between the frame 110 and the locking piece 200. The lever may be relatively thin and wide, for example chisel-like. The locking piece 200 can be removed by subjecting the lever to a supporting force and a torsional force, wherein the locking piece 200 is displaced and lifted at least partly off the frame 110. The locking piece 200 can move in the opposite direction with respect to its installation direction, as shown in Figs. 6g and 6h. After the locking piece 200 has been removed or displaced sufficiently, it may be possible to remove the end piece, which is illustrated in Fig. 6i. Preferably, the shapes of the locking piece 200 and the frame 110 are fitted to be such that one or more gaps are left between them, in which gap said tool can be inserted for removing the locking piece 200.

The frame of the profile bar or the locking piece can be made of, for example, plastic or metal, such as aluminium, and preferably both the locking piece and the frame of the profile bar are made of the same material. It is also possible that the fixing members 210 of the locking piece 200 are made of a material different from the rest of the locking piece. Typically, profile bars are provided at the two opposite edges of the panel, as shown in the example of Fig. 5d.

The invention is not restricted solely to the examples presented above. The invention is applied within the scope of the appended claims. The material for manufacturing the glass panel is selected according to the need, and it may comprise transparent or opaque alternatives. The thickness of the glass panel and the shape of the profile bar, as well as the more detailed dimensions of these, may vary as desired.

## Claims

1. A profile bar to be locked to a glass panel, the profile bar comprising a frame (110) whose shape is a continuous profile extending in the longitudinal direction, and said frame also comprising:
- a slot (111) which is continuous in the longitudinal direction and in which the panel (100) can be installed;
- a first side (111 a) and a second side (111 b) of the slot, delimiting the slot and supporting the glass panel to be installed in it; and
- a protrusion (112) provided on the first side (111 a) of the slot and configured to be placed in a groove (101) in the glass panel (100);
**characterized in that**
- the profile bar further comprises a separate locking piece (200) comprising a locking part (230) which can be inserted between the glass panel in the slot and the second side of the slot (111 b), where said locking part is configured to make the slot narrower, to push the glass panel against said protrusion and to support the glass panel in such a way that said protrusion remains in the groove (101) of the glass panel, wherein the detachment of the panel from the frame is prevented,
- the frame (110) comprises a first fixing member (120), and the locking piece (200) comprises a corresponding second fixing member (210), which fixing members are configured to be placed against each other and to lock the locking piece (200) in the frame, and
- the locking piece is made of plastic or metal.

2. The profile bar according to claim 1, **characterized in that** the second fixing member (210) is a flexible protrusion (213) or a shape (211) which is placed against the frame (110) and keeps the locking piece in position.

3. The profile bar according to claim 1 or 2, **characterized in that** the first side (111 a) of the slot comprises at least one groove (113) for positioning an adhesive or sealing compound.

4. The profile bar according to any of the claims 1 to 3, **characterized in that** the locking piece (200) forms at least part of the visible outer surface of the profile bar, when a panel is locked to the profile bar.

5. The profile bar according to any of the claims 1 to 4, **characterized in that** the profile bar further comprises a separate end piece (520) to be placed at the end of the frame (110), the end piece having a locking shape configured to correspond to a locking shape at the end of the locking piece (200), wherein said locking shapes are configured to be placed against each other and to lock the end piece (520) in position simultaneously when the locking piece (200) is inserted in the slot (111).

6. The profile bar according to claim 5, **characterized in that** the locking shape of the end piece (520) comprises at least one dent or protrusion which extends towards the locking piece, and the locking shape of the locking piece (200) comprises at least one dent or protrusion which extends in the opposite direction towards the end piece.

7. The profile bar according to any of the claims 1 to 6, **characterized in that** a gap is configured to be left between the locking piece (200) and the frame (110), when the locking piece is in position in the slot, in which gap a tool can be inserted for removing the locking piece.

8. The profile bar according to any of the claims 1 to 7, **characterized in that** the width of the slot (111) is configured substantially to correspond to the total thickness of the panel (100) and the locking piece (200), and said protrusion is configured to make said slot (111) narrower.

9. A panel system comprising a planar glass panel (100) equipped with at least one locking groove (101), and a profile bar according to any of the claims 1 to 8.

10. The panel system according to claim 9, **characterized in that** the width of the slot (111) is configured substantially to correspond to the total thickness of the panel (100) and the locking piece (200), and said protrusion is configured to make said slot (111) narrower.

11. The panel system according to claim 9 or 10, **characterized in that** the panel system further comprises a separate end piece (520) to be placed at the end of the frame (110), the end piece having a locking shape configured to correspond to a locking shape at the end of the locking piece (200), wherein said locking shapes are configured to be placed against each other and to lock the end piece (520) in position.

12. The panel system according to any of the claims 9 to 11, wherein the glass panel is locked to the profile bar, **characterized in that** the locking piece (200) forms at least part of the visible outer surface of the profile bar.

## Patentansprüche

1. Eine an einer Glasplatte zu verriegelnde Profilstange, wobei die Profilstange einen Rahmen (110) aufweist, dessen Form ein in Längsrichtung verlaufendes durchgehendes Profil ist, und der Rahmen zudem Folgendes aufweist:
- einen Schlitz (111), der in der Längsrichtung durchgehend ist und in dem die Platte (100) installiert werden kann;
- eine erste Seite (111 a) und eine zweite Seite (111 b) des Schlitzes, die den Schlitz abgrenzen und die darin zu installierende Glasplatte tragen; und
- einen Vorsprung (112), der an der ersten Seite (111a) des Schlitzes angeordnet und konfiguriert ist, um in einer Nut (101) in der Glasplatte (100) platziert zu werden;
**dadurch gekennzeichnet, dass**
- die Profilstange darüber hinaus ein separates Verriegelungsstück (200) aufweist, das ein Verriegelungsteil (230) aufweist, das zwischen die Glasplatte in dem Schlitz und der zweiten Seite des Schlitzes (111b) eingefügt werden kann, wo das Verriegelungsteil konfiguriert ist, um den Schlitz enger zu machen, um die Glasplatte gegen den Vorsprung zu schieben und die Glasplatte so zu tragen, dass der Vorsprung in der Nut (101) der Glasplatte verbleibt, wobei ein Ablösen der Platte von dem Rahmen verhindert wird,
- der Rahmen (110) ein erstes Befestigungselement (120) aufweist, und das Verriegelungsstück (200) ein entsprechendes zweites Befestigungselement (210) aufweist, wobei die Befestigungselemente konfiguriert sind, um aneinander angelegt zu werden und das Verriegelungsstück (200) in dem Rahmen zu verriegeln, und
- das Verriegelungsstück aus Kunststoff oder Metall hergestellt ist.

2. Profilstange gemäß Anspruch 1, **dadurch gekennzeichnet, dass** das zweite Befestigungselement (210) ein flexibler Vorsprung (213) oder eine Form (211) ist, die gegen den Rahmen (110) platziert wird und das Verriegelungsstück in Position hält.

3. Profilstange gemäß Anspruch 1 oder 2, **dadurch gekennzeichnet, dass** die erste Seite (111a) des Schlitzes mindestens eine Nut (113) zum Anbringen eines Klebstoffs oder einer Dichtmasse aufweist.

4. Profilstange gemäß einem der Ansprüche 1 bis 3, **dadurch gekennzeichnet, dass** das Verriegelungsstück (200) mindestens einen Teil der sichtbaren Außenfläche der Profilstange bildet, wenn eine Platte an der Profilstange verriegelt ist.

5. Profilstange gemäß einem der Ansprüche 1 bis 4, **dadurch gekennzeichnet, dass** die Profilstange darüber hinaus ein separates Endstück (520) aufweist, um an dem Ende des Rahmens (110) platziert zu werden, wobei das Endstück eine Verriegelungsform aufweist, die konfiguriert ist, um einer Verriegelungsform am Ende des Verriegelungsstücks (200) zu entsprechen, wobei die Verriegelungsformen konfiguriert sind, um aneinander angelegt zu werden und das Endstück (520) gleichzeitig in Position zu halten, wenn das Verriegelungsstück (200) in den Schlitz (111) eingefügt ist.

6. Profilstange gemäß Anspruch 5, **dadurch gekennzeichnet, dass** die Verriegelungsform des Endstücks (520) mindestens eine Vertiefung oder einen Vorsprung aufweist, die/der in Richtung des Verriegelungsstücks verläuft, und die Verriegelungsform des Verriegelungsstücks (200) mindestens eine Vertiefung oder einen Vorsprung aufweist, die/der in der entgegengesetzten Richtung zum Endstück hin verläuft.

7. Profilstange gemäß einem der Ansprüche 1 bis 6, **dadurch gekennzeichnet, dass** ein Spalt konfiguriert ist, um zwischen dem Verriegelungsstück (200) und dem Rahmen (110) zu verbleiben, wenn sich das Verriegelungsstück in dem Schlitz in Position befindet, wobei ein Werkzeug zum Entfernen des Verriegelungsstücks in den Spalt eingeführt werden kann.

8. Profilstange gemäß einem der Ansprüche 1 bis 7, **dadurch gekennzeichnet, dass** die Breite des Schlitzes (111) konfiguriert ist, um im Wesentlichen der Gesamtdicke der Platte (100) und des Verriegelungsstücks (200) zu entsprechen, und der Vorsprung konfiguriert ist, um den Schlitz (111) enger zu machen.

9. Ein Plattensystem, das eine planare Glasplatte (100) aufweist, die mit mindestens einer Verriegelungsnut (101) und einer Profilstange gemäß einem der Ansprüche 1 bis 8 ausgestattet ist.

10. Plattensystem gemäß Anspruch 9, **dadurch gekennzeichnet, dass** die Breite des Schlitzes (111) im Wesentlichen konfiguriert ist, um der Gesamtdicke der Platte (100) und des Verriegelungsstücks (200) zu entsprechen, und der Vorsprung konfiguriert ist, um den Schlitz (111) enger zu machen.

11. Plattensystem gemäß Anspruch 9 oder 10, **dadurch gekennzeichnet, dass** das Plattensystem darüber hinaus ein separates Endstück (520) aufweist, um am Ende des Rahmens (110) platziert zu werden, wobei das Endstück eine Verriegelungsform aufweist, die konfiguriert ist, um einer Verriegelungsform am Ende des Verriegelungsstücks (200) zu entsprechen, wobei die Verriegelungsformen konfiguriert sind, um aneinander angelegt zu werden und das Endstück (520) in Position zu verriegeln.

12. Plattensystem gemäß einem der Ansprüche 9 bis 11, wobei die Glasplatte an der Profilstange verriegelt ist, **dadurch gekennzeichnet, dass** das Verriegelungsstück (200) mindestens einen Teil der sichtbaren Außenfläche der Profilstange bildet.

## Revendications

1. Barre profilée destinée à être verrouillée sur un panneau de verre, la barre profilée comprenant une ossature (110) dont la forme est un profil continu s'étendant dans la direction longitudinale, et ladite ossature comprenant également :
- une gorge (111) qui est continue dans la direction longitudinale et dans laquelle peut être installé le panneau (100) ;
- un premier côté (111a) et un deuxième côté (111 b) de la gorge, délimitant la gorge et supportant le panneau de verre destiné à être installé dans celle-ci ; et
- une partie saillante (112) fournie sur le premier côté (111a) de la gorge et configurée pour être placée dans une rainure (101) du panneau de verre (100) ;
**caractérisée en ce que**
- la barre profilée comprend en outre une pièce de verrouillage (200) séparée comprenant une partie verrouillage (230) qui peut être insérée dans la gorge entre le panneau de verre et le deuxième côté de la gorge (111 b), ladite partie verrouillage étant configurée pour rendre la gorge plus étroite, pour pousser le panneau de verre contre ladite partie saillante et pour supporter le panneau de verre de telle manière que ladite partie saillante reste dans la rainure (101) du panneau de verre, en empêchant la séparation du panneau et de l'ossature,
- l'ossature (110) comprend un premier organe de fixation (120), et la pièce de verrouillage (200) comprend un deuxième organe de fixation (210) correspondant, lesdits organes de fixation étant configurés pour être placés l'un contre l'autre et pour verrouiller la pièce de verrouillage (200) dans l'ossature, et
- la pièce de verrouillage est réalisée en plastique ou en métal.

2. Barre profilée selon la revendication 1, **caractérisée en ce que** le deuxième organe de fixation (210) est une partie saillante flexible (213) ou une forme (211) qui est placée contre l'ossature (110) et qui maintient la pièce de verrouillage en position.

3. Barre profilée selon la revendication 1 ou 2, **caractérisée en ce que** le premier côté (111 a) de la gorge comprend au moins une rainure (113) permettant de positionner un composé adhésif ou d'étanchéification.

4. Barre profilée selon l'une quelconque des revendications 1 à 3, **caractérisée en ce que** la pièce de verrouillage (200) forme au moins une partie de la surface extérieure visible de la barre profilée, lorsqu'un panneau est verrouillé sur la barre profilée.

5. Barre profilée selon l'une quelconque des revendications 1 à 4, **caractérisée en ce que** la barre profilée comprend en outre une pièce d'extrémité (520) séparée destinée à être placée au niveau de l'extrémité de l'ossature (110), la pièce d'extrémité présentant une forme verrouillante configurée pour correspondre à une forme verrouillante au niveau de l'extrémité de la pièce de verrouillage (200), lesdites formes verrouillantes étant configurées pour être placées l'une contre l'autre et pour verrouiller la pièce d'extrémité (520) en position de manière simultanée lorsque la pièce de verrouillage (200) est insérée dans la gorge (111).

6. Barre profilée selon la revendication 5, **caractérisée en ce que** la forme verrouillante de la pièce d'extrémité (520) comprend au moins un creux ou une partie saillante qui s'étend en direction de la pièce de verrouillage, et la forme verrouillante de la pièce de verrouillage (200) comprend au moins un creux ou une partie saillante qui s'étend dans la direction opposée en direction de la pièce d'extrémité.

7. Barre profilée selon l'une quelconque des revendications 1 à 6, **caractérisée en ce qu'**un espace vide est configuré de manière à être laissé entre la pièce de verrouillage (200) et l'ossature (110), lorsque la pièce de verrouillage est en position dans la gorge, un outil pouvant être inséré dans ledit espace vide afin de retirer la pièce de verrouillage.

8. Barre profilée selon l'une quelconque des revendications 1 à 7, **caractérisée en ce que** la largeur de la gorge (111) est configurée essentiellement de manière à correspondre à l'épaisseur totale du panneau (100) et de la pièce de verrouillage (200), et ladite partie saillante est configurée pour rendre ladite gorge (111) plus étroite.

9. Système de panneau comprenant un panneau en verre plan (100) équipé d'au moins une rainure de verrouillage (101), et une barre profilée selon l'une quelconque des revendications 1 à 8.

10. Système de panneau selon la revendication 9, **caractérisé en ce que** la largeur de la gorge (111) est configurée essentiellement de manière à correspondre à l'épaisseur totale du panneau (100) et de la pièce de verrouillage (200), et ladite partie saillante est configurée pour rendre ladite gorge (111) plus étroite.

11. Système de panneau selon la revendication 9 ou 10, **caractérisé en ce que** ledit système de panneau comprend en outre une pièce d'extrémité (520) séparée destinée à être placée au niveau de l'extrémité de l'ossature (110), la pièce d'extrémité présentant une forme verrouillante configurée pour correspondre à une forme verrouillante au niveau de l'extrémité de la pièce de verrouillage (200), lesdites formes verrouillantes étant configurées pour être placées l'une contre l'autre et pour verrouiller la pièce d'extrémité (520) en position.

12. Système de panneau selon l'une quelconque des revendications 9 à 11, dans lequel le panneau de verre est verrouillé sur la barre profilée, **caractérisé en ce que** la pièce de verrouillage (200) forme au moins une partie de la surface extérieure visible de la barre profilée.
